# NEW EUROPEAN PATENT SPECIFICATION

(11) **EP 3 019 567 B2**
(45) Date of publication and mention of the opposition decision: **25.10.2023**
(45) Mention of the grant of the patent: 24.05.2017
(21) Application number: 14744717.1
(22) Date of filing: 10.07.2014
(51) Int. Cl.: C09D 151/00, C09D 143/02, C08F 265/02, C08F 265/06, C08F 275/00

(54) **COATING COMPOSITIONS WITH IMPROVED ADHESION TO CONTAINERS**
BESCHICHTUNGSZUSAMMENSETZUNGEN MIT VERBESSERTER HAFTUNG AN BEHÄLTERN
COMPOSITIONS DE REVÊTEMENT PRÉSENTANT UNE ADHÉRENCE AMÉLIORÉE À DES CONTENANTS

(30) Priority: 11.07.2013 US 201313939222
(43) Date of publication of application: 18.05.2016
(73) Proprietor: PPG Industries Ohio, Inc., Cleveland, OH 44111 (US)
(72) Inventor: SINGER, Debra L., Wexford, Pennsylvania 15090 (US); DUDIK, John M., Apollo, Pennsylvania 15613 (US)
(74) Representative: f & e patent
(86) International application number: PCT/US2014/046069
(87) International publication number: WO 2015/006522

(56) References cited:
- EP-A1- 1 398 333
- EP-A1- 2 599 844
- EP-A2- 0 787 830
- WO-A1-2006/045017
- US-A- 4 522 961
- US-A1- 2010 178 442
- Hui Shirley Yang et al.: "Phosphate Polymerizable Adhesion Promoters", JCT coatings Tech, February 2005 (2005-02), pages 44-52,

## Description

### FIELD OF THE INVENTION

The present invention relates to compositions that are useful for coating containers of various sorts such as food and beverage containers.

### BACKGROUND OF THE INVENTION

A wide variety of coatings have been used to coat the surfaces of food and beverage containers. For example, metal cans are sometimes coated using coil coating or sheet coating operations, that is, a plane or coil or sheet of a suitable substrate, for example, steel or aluminum is coated with a suitable composition and cured. The coated substrate is then formed into the can body or can end. Alternatively, the coating composition may be applied, for example, by spraying, dipping and roll coating, to the formed can and then cured. Coatings for food and beverage containers should preferably be capable of high speed application to the substrate and provide the necessary properties when cured to perform in a demanding end use. For example, the coating should be safe for food contact and have excellent adhesion to the substrate.

Many of the coating compositions for food and beverage containers are based on epoxy resins that are the polyglycidyl ethers of bisphenol A. Bisphenol A in packaging coatings either as bisphenol A itself (BPA) or derivatives thereof, such as diglycidyl ethers of bisphenol A (BADGE), epoxy novolak resins and polyols prepared with bisphenol A and bisphenol F are problematic. Although the balance of scientific evidence available to date indicates that small trace amounts of BPA or BADGE that might be released from existing coatings does not pose health risks to humans, these compounds are nevertheless perceived by some as being harmful to human health. Consequently, there is a strong desire to eliminate these compounds from coatings for food and beverage containers. Accordingly, what is desired is a packaging coating composition for food or beverage containers that does not contain extractable quantities of BPA, BADGE or other derivatives of BPA and yet has excellent properties such as excellent adhesion to the substrate.

### SUMMARY OF THE INVENTION

The present invention provides an aqueous coating composition comprising:
(A) an aqueous polymer dispersion comprising a film-forming polymer in the form of dispersed polymer particles comprising a polymer phase P₁ and a different polymer phase P₂; the polymer dispersion obtained by free radical aqueous emulsion polymerization comprising the following steps:
   (i) polymerizing in non-aqueous medium a first monomer charge M1 comprising a polymerizable ethylenically unsaturated monomer mixture containing a carboxylic acid group-containing ethylenically unsaturated monomer and a phosphorus acid group-containing ethylenically unsaturated monomer to form the polymer phase P₁;
   (ii) dispersing P1 in aqueous medium and
   (iii) polymerizing a second monomer charge M2 in the presence of P₁ comprising a polymerizable ethylenically unsaturated monomer mixture different from that of M1 and containing a 1,2-epoxy group-containing ethylenically unsaturated monomer to form the polymer phase P₂;
(B) a curing agent reactive with the film-forming polymer.

The present invention also provides for a food can coated at least in part with a coating deposited from the aqueous coating composition described above.

### DETAILED DESCRIPTION

As used herein, unless otherwise expressly specified, all numbers such as those expressing values, ranges, amounts or percentages may be read as if prefaced by the word "about", even if the term does not expressly appear. Moreover, it should be noted that plural terms and/or phrases encompass their singular equivalents and vice versa. For example, "a" polymer, "a" crosslinker, and any other component refer to one or more of these components.

When referring to any numerical range of values, such ranges are understood to include each and every number and/or fraction between the stated range minimum and maximum.

As used herein, the term "polymer" refers broadly to oligomers and both homopolymers and copolymers. The term "resin" is used interchangeably with "polymer".

The terms "acrylic" and "acrylate" are used interchangeably (unless to do so would alter the intended meaning) and include acrylic acids, anhydrides, and derivatives thereof, such as their C₁-C₅ alkyl esters, lower alkyl-substituted acrylic acids, e.g., C₁-C₂ substituted acrylic acids, such as methacrylic acid, ethacrylic acid, etc., and their C₁-C₄ alkyl esters, unless clearly indicated otherwise. The terms "(meth)acrylic" or "(meth)acrylate" are intended to cover both the acrylic/acrylate and methacrylic/methacrylate forms of the indicated material, e.g., a (meth)acrylate monomer. The term "(meth)acrylic polymer" refers to polymers prepared from one or more (meth)acrylic monomers.

The term "acid" includes acid salts.

The term "food" includes both food and beverages.

As used herein molecular weights are determined by gel permeation chromatography using a polystyrene standard. Unless otherwise indicated molecular weights are on a weight average basis.

The weight average molecular weight of P₁ is about 5,000 to 25,000.

The monomer make up of M1 comprises a polymerizable ethylenically unsaturated carboxylic acid and a phosphorus acid group-containing ethylenically unsaturated monomer.

Examples of polymerizable ethylenically unsaturated carboxylic acid monomers are acrylic and methacrylic acid with acrylic acid being preferred. These monomers are usually present in amounts of about 15 to 60 percent by weight based on total monomer weight of M1 and the resultant polymer can be at least partially neutralized with a base to form the amine salt and assist in dispersing the polymer particles.

Examples of other polymerizable ethylenically unsaturated monomers that can be present in M1 are vinyl aromatic monomers such as styrene and vinyl toluene and lower alkyl esters of acrylic and methacrylic acid, i.e., those having from 1 to 4, such as 1 to 2 carbon atoms in the alkyl group. Examples include methyl methacrylate, ethyl acrylate and butyl methacrylate. These monomers are typically present in amounts of at least 20 percent, such as 20 to 83 percent by weight based on total monomer weight in M1.

The phosphorus acid group-containing ethylenically unsaturated monomers provide for increased wet adhesion of the resultant coating to the substrate. Examples of such monomers are those of the structure: 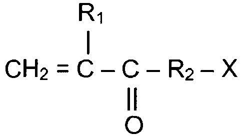 where R₁ represents hydrogen or methyl; R₂ represents a polyoxyalkylene group and X represents a phosphoric acid group.

Specifically, R₂ can have the following structure:

(̵OCₙH₂ₙ)̵ₘ

where n is an integer of 2 to 4, such as 2-3 and m is 2 to 40. Preferably, n = 2 and m = 2 to 8.

X can have the following structure: 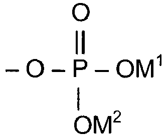 where M¹ and M² each independently represent hydrogen or a cation.

Examples of such monomers are those commercially available from Rhodia as Sipomer PAM-100, Sipomer PAM-200 and Sipomer PAM-300. PAM-100, R₁ = methyl, n = 2 and m = 7, is particularly preferred. These monomers are typically present in amounts of about 2 to 20 percent by weight based on total monomer weight in M1.

The monomer make up of M2 is similar to that of M1, however, there are no ethylenically unsaturated carboxylic acid monomers in M2 and no phosphorus acid group-containing ethylenically unsaturated monomers. Also, the M2 monomers include a 1,2-epoxy group-containing ethylenically unsaturated monomer and can include a multi-ethylenically unsaturated monomer. Specifically, M2 can comprise one or more vinyl aromatic monomers such as styrene or vinyl toluene and/or one or more alkyl (meth)acrylates having 4 to 8 carbon atoms in the alkyl group such as butyl methacrylate and 2-ethylhexyl (meth)acrylate. These monomers are typically present in amounts of 80 to 99 percent by weight based on total monomer weight of M2.

Examples of 1,2-epoxy group-containing ethylenically unsaturated monomers are glycidyl acrylate and glycidyl methacrylate. These monomers provide improved resistance properties such as acid and solvent resistance to the resultant coating and are typically present in amounts of 1 to 20 percent by weight based on total monomer weight of M2.

M2 can optionally contain a multi-ethylenically unsaturated monomer such as a diacrylate or dimethacrylate of a diol containing from 2 to 10 carbon atoms. Examples include butanediol diacrylate and hexanediol diacrylate. When present, these monomers are usually present in amounts no greater than 10 percent by weight based on total monomer weight of M2.

The film forming polymer typically has a weight average molecular weight of greater than 10,000 such as 10,000 to 1,000,000

The polymer particles in the binder polymer dispersion typically have a polymer particle size surface rated mean in the range from 50 to 1000 nm, such as 100 to 300 nm, by light scattering techniques.

The aqueous polymer dispersions of the invention are prepared by free-radical polymerization of the monomer charge M1 in non-aqueous medium, such as by solution polymerization in organic solvent in the presence of at least one free-radical polymerization initiator.

The polymer P₁ is then dispersed in aqueous medium, typically by at least partially neutralizing the carboxylic acid groups in the polymer with a base such as a low molecular weight amine such as dimethyl ethanolamine. The free-radical initiator is typically soluble in the polymerizable mixture. Examples include azo compounds and peroxides. Typically, the monomer M1 and free-radical initiator are added concurrently and continuously to a refluxing organic solvent and polymerization is continued until completed.

After the polymer P₁ is dispersed in aqueous medium, an emulsion polymerization of the monomer charge M2 is then conducted in the resulting dispersion of the polymer P₁. This forms an aqueous polymer dispersion whose polymer particles contain both a polymer phase P₁ and a polymer phase P₂. The weight ratio of P₁ to P₂ is from 1:2 to 1:5.

The aqueous polymerization medium may contain a water-miscible organic solvent in amounts of up to 25 percent by weight based on total weight of the aqueous polymerization medium.

Suitable free-radical polymerization initiators are all those capable of triggering a free-radical aqueous emulsion polymerization. They may include both peroxides, e.g., alkali metal peroxodisulfates, and azo compounds. As polymerization initiators it is common to use what are known as redox initiators, which are composed of at least one organic reducing agent and at least one peroxide and/or hydroperoxide, e.g., tert-butyl hydroperoxide with sulfur compounds, e.g., the sodium salt of hydroxymethanesulfinic acid, sodium sulfite, sodium disulfite, sodium thiosulfate or acetone bisulfite adduct, or hydrogen peroxide with ascorbic acid or benzoin. The amount of free-radical initiator systems used, based on the overall amount of the monomers M1+M2 to be polymerized, is preferably from 0.1 to 2% by weight.

Usually the pH of the dispersion is adjusted to a range of from 6 to 10 by adding a base, e.g., alkali metal hydroxides, alkaline earth metal hydroxides, or nonvolatile amines, volatile amines and ammonium hydroxide.

By the emulsion polymerization route it is possible to obtain dispersions having solids contents in the range from 20 to 50% by weight.

The aqueous polymer dispersions of the invention are stable liquid systems. They form films, and can therefore be used as binders for pigmented and unpigmented coating compositions. Examples of such coating compositions are those that are used to coat containers such as food cans.

Coating compositions for container coatings are typically formulated with a curing agent that is reactive with the functional groups of the film-forming polymer.

Typically curing agents are phenolplasts or phenol-formaldehyde resins and aminoplast or triazine-formaldehyde resins. The phenol-formaldehyde resins are preferably of the resol type. Examples of suitable phenols are phenol itself, butyl phenol, xylenol and cresol. Cresolformaldehyde resins, typically etherified with butanol, are often used. For the chemistry in preparation of phenolic resins, reference is made to "The Chemistry and Application of Phenolic Resins or Phenolplasts", Vol. V, Part I, edited by Dr. Oldring; John Wiley & Sons/Cita Technology Limited, London, 1997. Examples of commercially available phenolic resins are PHENODUR^{®} PR285 and BR612 and those resins sold under the trademark BAKELITE^{®}, typically BAKELITE 6581 LB.

Examples of aminoplast resins are those which are formed by reacting a triazine such as melamine or benzoguanamine with formaldehyde. Preferably, these condensates are etherified typically with methanol, ethanol, and butanol including mixtures thereof. For the chemistry preparation and use of aminoplast resins, see "The Chemistry and Applications of Amino Crosslinking Agents or Aminoplast", Vol. V, Part II, page 21 ff., edited by Dr. Oldring; John Wiley & Sons/Cita Technology Limited, London, 1998. These resins are commercially available under the trademark MAPRENAL^{®} such as MAPRENAL MF980 and under the trademark CYMEL^{®} such as CYMEL 303 and CYMEL 1128, available from Cytec Industries.

Typically, the film-forming polymer is used in amounts of 60 to 98, such as 70 to 98 percent by weight, and the crosslinking agent is present in amounts of 2 to 40, such as 2 to 30 percent by weight, the percentages by weight being based on the weight of total resin solids in the coating composition.

The coating composition contains a diluent, such as water, or a mixture of water and organic solvent. The organic solvent is selected to have sufficient volatility to evaporate essentially entirely from the coating composition during the curing process such as during heating from 175-205°C for about 5 to 15 minutes. Examples of suitable organic solvents are aliphatic hydrocarbons such as mineral spirits and high flash point VM&P naphtha; aromatic hydrocarbons such as benzene, toluene, xylene and solvent naphtha 100, 150, 200 and the like; alcohols, for example, ethanol, n-propanol, isopropanol, n-butanol and the like; ketones such as acetone, cyclohexanone, methylisobutyl ketone and the like; esters such as ethyl acetate, butyl acetate, and the like; glycols such as butyl glycol, glycol ethers such as methoxypropanol and ethylene glycol monomethyl ether and ethylene glycol monobutyl ether and the like. Mixtures of various organic solvents can also be used.

Adjuvant resins such as polyester polyols, polyether polyols and polyurethane polyols may be included in the coating compositions to maximize certain properties of the resultant coating. When present, the adjuvant resin is used in amounts of up to 50, typically 2-50 percent by weight based on weight of resin solids of the coating composition.

Another optional ingredient that is typically present in the coating composition is a catalyst to increase the rate of cure or crosslinking of the coating compositions. Generally acid catalyst may be used and is typically present in amounts of about 0.05 to 5 percent by weight. Examples of suitable catalyst are dodecyl benzene sulfonic acid, methane sulfonic acid, paratoluene sulfonic acid, dinonyl naphthalene disulfonic acid and phenyl phosphonic acid. It has been found that the amount of acid catalyst in the coating compositions of the invention is not as great as would normally be expected due to the presence of the reaction product of the phosphorus acid with the polyglycidyl ether of cyclohexane dimethanol. This reaction product is acidic and has been found to contribute to the cure of the coating composition.

A lubricant that facilitates manufacture of metal containers by imparting lubricity to the sheets of a coated metal substrate used in forming the containers can also be used. Examples of lubricants include carnauba wax and polyethylene-type lubricants. If used, the lubricant is preferably present in the coating compositions of at least 0.1 percent by weight based on weight of resin solids in the coating composition.

Another useful optional ingredient is a pigment such as titanium dioxide. If used, the pigment is present in the coating compositions in amounts no greater than 70 percent by weight, preferably no greater than 40 percent by weight based on total weight of solids in the coating composition.

Surfactants can be included in the coating composition to aid in flow and wetting of the substrate. Examples of suitable surfactants include, but are not limited to, nonyl phenol polyether and salts. If used, the surfactant is present in amounts of at least 0.01 percent and no greater than 10 percent based on weight of resin solids in the coating composition.

In certain embodiments, the compositions used in the practice of the invention are substantially free, may be essentially free and may be completely free of bisphenol A and derivatives or residues thereof, including bisphenol A ("BPA") and bisphenol A diglycidyl ether ("BADGE"). Such compositions are sometimes referred to as "BPA non intent" because BPA, including derivatives or residues thereof, are not intentionally added but may be present in trace amounts because of unavoidable contamination from the environment. The compositions can also be substantially free and may be essentially free and may be completely free of bisphenol F and derivatives or residues thereof, including bisphenol F and bisphenol F diglycidyl ether ("BPFG"). The term "substantially free" as used in this context means the compositions contain less than 1000 parts per million (ppm), "essentially free" means less than 100 ppm and "completely free" means less than 20 parts per billion (ppb) of any of the above mentioned compounds, derivatives or residues thereof.

The coating compositions of the present invention can be applied to containers of all sorts and are particularly well adapted for use on food and beverage cans (e.g., two-piece cans, three-piece cans, etc.). Besides food and beverage containers, the coating compositions can be applied to containers for aerosol applications such as deodorant and hair spray.

Two-piece cans are manufactured by joining a can body (typically a drawn metal body) with a can end (typically a drawn metal end). The coatings of the present invention are suitable for use in food or beverage contact situations and may be used on the inside or outside of such cans. They are suitable for spray applied, liquid coatings, wash coatings, sheet coatings, over varnish coatings and side seam coatings.

Spray coating includes the introduction of the coating composition into the inside or outside of a preformed packaging container. Typical preformed packaging containers suitable for spray coating include food cans, beer and beverage containers, and the like. The sprayed preformed container is then subjected to heat to remove the residual solvents and harden the coating.

A coil coating is described as the coating, typically by a roll coating application, of a continuous coil composed of a metal (e.g., steel or aluminum). Once coated, the coating coil is subjected to a short thermal, ultraviolet, and/or electromagnetic curing cycle, for hardening (e.g., drying and curing) of the coating. Coil coatings provide coated metal (e.g., steel and/or aluminum) substrates that can be fabricated into formed articles, such as two-piece drawn food cans, three-piece food cans, food can ends, drawn and ironed cans, beverage can ends, and the like.

A wash coating is commercially described as the coating of the exterior of two-piece drawn and ironed ("D&I") cans with a thin layer of protectant coating. The exterior of these D&I cans are "wash-coated" by passing preformed two-piece D&I cans under a curtain of a coating composition. The cans are inverted, that is, the open end of the can is in the "down" position when passing through the curtain. This curtain of coating composition takes on a "waterfall-like" appearance. Once these cans pass under this curtain of coating composition, the liquid coating material effectively coats the exterior of each can. Excess coating is removed through the use of an "air knife". Once the desired amount of coating is applied to the exterior of each can, each can is passed through a thermal, ultraviolet, and/or electromagnetic curing oven to harden (e.g., dry and cure) the coating. The residence time of the coated can within the confines of the curing oven is typically from 1 minute to 5 minutes. The curing temperature within this oven will typically range from 150°C to 220°C.

A sheet coating is described as the coating of separate pieces of a variety of materials (e.g., steel or aluminum) that have been pre-cut into square or rectangular "sheets". Typical dimensions of these sheets are approximately one square meter. Once coated, each sheet is cured. Once hardened (e.g., dried and cured), the sheets of the coated substrate are collected and prepared for subsequent fabrication. Sheet coatings provide coated metal (e.g., steel or aluminum) substrate that can be successfully fabricated into formed articles, such as two-piece drawn food cans, three-piece food cans, food can ends, drawn and ironed cans, beverage can ends, and the like.

A side seam coating is described as the spray application of a liquid coating over the welded area of formed three-piece food cans. When three-piece food cans are being prepared, a rectangular piece of coated substrate is formed into a cylinder. The formation of the cylinder is rendered permanent due to the welding of each side of the rectangle via thermal welding. Once welded, each can typically requires a layer of liquid coating, which protects the exposed "weld" from subsequent corrosion or other effects to the contained foodstuff. The liquid coatings that function in this role are termed "side seam stripes". Typical side seam stripes are spray applied and cured quickly via residual heat from the welding operation in addition to a small thermal, ultraviolet, and/or electromagnetic oven.

### EXAMPLES

The following examples are offered to aid in understanding of the present invention and are not to be construed as limiting the scope thereof. Unless otherwise indicated, all parts and percentages are by weight.

### Example A

A total of 156 grams of Dowanol PM and 309 grams of butyl Cellosolve were added to a 5-liter, 4-neck round bottom flask equipped with a stirrer, water-cooled reflux condenser, two addition funnels and a thermocouple. The contents were stirred and purged of air and a light positive flow of nitrogen gas was started. The contents of the flask were heated to about 120°C at which time they began to reflux lightly. A total of 279 grams of methacrylic acid, 110.5 grams of ethyl acrylate, 195 grams of styrene and 65 grams of Sipomer PAM-200 were mixed together and placed in one of the addition funnels. A total of 31.2 grams of t-butyl peroctoate was diluted with 124.9 grams of butyl Cellosolve and placed in the 2^{nd} addition funnel. This is the initiator for the reaction.

The contents of the initiator funnel were added slowly to the reactor at a uniform rate over 180 minutes. Five minutes after the start of the initiator feed, the contents of the monomer funnel were added to the flask over 150 minutes. The temperature of the reaction was maintained at 120°C during the additions.

After both additions were complete, another aliquot of t-butyl peroctoate diluted with butyl Cellosolve was added to the contents of the reaction over 30 minutes. The reaction was then held at 120°C for one hour. The contents of the reactor were then cooled to 80°C and 144 grams of dimethyl ethanolamine was added to the reactor followed by addition of 1741 grams of deionized water.

The contents of the flask were then cooled to 50°C and poured into a suitable container. The final resin had a measured solids of 26%, a Gardner-Holt viscosity of H-I, a number average molecular weight of 3150, and a weight average molecular weight of 9850.

### Example B

A total of 322 grams of the resin of Example A was added to a 3-liter, 4-neck round bottom flask equipped with a stirrer, water-cooled reflux condenser, two addition funnels and a thermocouple. A total of 509 grams of deionized water was added to the flask over 5 to 10 minutes with stirring and under a nitrogen gas blanket. A monomer mixture consisting of 71 grams of styrene, 92 grams of butyl methacrylate and 14 grams of glycidyl methacrylate were mixed in a separate container. The contents of the flask were then heated slowly to 70°C. A slurry of 1.8 grams of benzoin in 9 grams of water was then added to the flask and 177 grams of the monomer premix was added to the flask over 5 minutes. The contents of the reactor were heated to about 80°C and 1.8 grams of 35% hydrogen peroxide diluted with 9 grams of deionized water were added to the reactor. After about 5 minutes, the remainder of the monomer mixture, about 158 grams, mixed with 7.4 grams of hexanediol diacrylate were fed into the reactor over about 1 hour.

At the end of the monomer feed, 17 grams of water was added as a rinse. The reaction was maintained at 80°C for 10 minutes. Then an additional aliquot of 0.31 grams of benzoin and 0.31 grams of 35% hydrogen peroxide were added as a chase initiator to the reactor. The reaction was held with stirring for an additional 120 minutes at 80°C. It was then allowed to cool to <40°C, filtered and filled out into a suitable container. The final resin had a measured solids of 25%, a surface weighted mean particle size of 113nm and a bluish-white appearance.

### Comparative Example C

A total of 121 grams of Dowanol PM and 256 grams of butyl Cellosolve were added to a 5-liter, 4-neck round bottom flask equipped with a stirrer, water-cooled reflux condenser, two addition funnels and a thermocouple. The contents were stirred and purged of air and a light positive flow of nitrogen gas was started. The contents of the flask were heated to about 120-130°C at which time they began to reflux lightly. A total of 225 grams of methacrylic acid, 125 grams of ethyl acrylate, 150 grams of styrene were mixed together and placed in one of the addition funnels. A total of 20 grams of t-butyl peroctoate was diluted with 80 grams of butyl Cellosolve and placed in the 2^{nd} addition funnel. This is the initiator for the reaction.

The contents of the initiator funnel were added slowly to the reactor at a uniform rate over 180 minutes. Five minutes after the start of the initiator feed, the contents of the monomer funnel were added to the flask over 150 minutes. The temperature of the reaction was maintained at about 120-130°C during the additions.

After both additions were complete, another aliquot of t-butyl peroctoate diluted with butyl Cellosolve was added to the contents of the reaction over 30 minutes. The reaction was then held at 120-130°C for one hour. The contents of the reactor were then cooled to 80°C and 116 grams of dimethyl ethanolamine was added to the reactor followed by addition of 1354 grams of deionized water.

The contents of the flask were then cooled to 50°C and poured into a suitable container. The final resin had a measured solids of 26%, a Gardner-Holt viscosity of H, a number average molecular weight of 4748, and a weight average molecular weight of 11891.

### Comparative Example D

A total of 322 grams of Comparative Example 1 was added to a 3-liter, 4-neck round bottom flask equipped with a stirrer, water-cooled reflux condenser, two addition funnels and a thermocouple. A total of 508 grams of deionized water was added to the flask over 5 to 10 minutes with stirring and under a nitrogen gas blanket. A monomer mixture consisting of 71 grams of styrene, 99 grams of butyl acrylate and 14 grams of glycidyl methacrylate were mixed in a separate container. The contents of the flask were then heated slowly to 70°C. A slurry of 1.8 grams of benzoin in 9 grams of water was then added to the flask and 177 grams of the monomer premix was added to the flask over 5 minutes. The contents of the reactor were heated to about 80°C and 1.8 grams of 35% hydrogen peroxide diluted with 9 grams of deionized water were added to the reactor. After about 5 minutes, the remainder of the monomer mixture, about 165 grams were fed into the reactor over about 1 hour.

At the end of the monomer feed, 17 grams of water was added as a rinse. The reaction was maintained at 80°C for 10 minutes. Then an additional aliquot of 0.31 grams of benzoin, 17 grams of water and 0.31 grams of 35% hydrogen peroxide were added as a chase initiator to the reactor. The reaction was held with stirring for an additional 120 minutes at 80°C. It was then allowed to cool to <40°C, filtered and filled out into a suitable container. The final resin had a measured solids of 23%, a surface weighted mean particle size of 114nm and a bluish-white appearance.

Paints were prepared from Example B and comparative Example D by adding the ingredients defined in Table 1 in the listed order into small lined paint cans while under modest agitation with a mixer. After the last ingredient was added, the paints were stirred for another five minutes and aged over night prior to testing.

**Table 1**

| Paints | %TS | Example 1 | | Example 2 | | Example 3 | | Example 4 Comparative | | Example 5 Comparative | | Example 6 Comparative | |
|---|---|---|---|---|---|---|---|---|---|---|---|---|---|
| | | Wght | NV | Wght | NV | Wght | NV | Wght | NV | Wght | NV | Wght | NV |
| Example B | 25.0 | 50.0 | 12.5 | 50.0 | 12.5 | 50.0 | 12.5 | | | | | | |
| Example D (Comp.) | 23.1 | | | | | | | 54.1 | 12.5 | 54.1 | 12.5 | 54.1 | 12.5 |
| DI Water | | 11.8 | | 14.5 | | 17.8 | | 10.8 | | 13.5 | | 16.8 | |
| Butyl Cellosolve | | 3.2 | | 3.2 | | 3.2 | | 3.2 | | 3.2 | | 3.2 | |
| Amyl Alcohol | | 2.0 | | 2.0 | | 2.0 | | 2.0 | | 2.0 | | 2.0 | |
| n-Butanol | | 0.4 | | 0.4 | | 0.4 | | 0.4 | | 0.4 | | 0.4 | |
| Dowanol DPM | | 3.1 | | 3.1 | | 3.1 | | | | | | | |
| HRJ 13078 | 75.0 | 0.9 | 0.7 | 1.9 | 1.4 | 2.9 | 2.2 | 0.9 | 0.7 | 1.9 | 1.4 | 2.9 | 2.2 |
| Total | | 71.4 | 13.2 | 75.1 | 13.9 | 79.4 | 14.7 | 71.4 | 13.2 | 75.1 | 13.9 | 79.4 | 14.7 |
| %TS | | 18.5 | | 18.5 | | 18.5 | | 18.5 | | 18.5 | | 18.5 | |
| % Xlinker on NV | | 5.0 | | 10.0 | | 15.0 | | 5.0 | | 10.0 | | 15.0 | |
| HRJ 13078 phenolic crosslinker is available from SI Group, Inc. | | | | | | | | | | | | | |

Coatings were prepared by using wire wound rods to draw the wet paints over electrolytic tin plated steel panels and aluminum from two piece cans to obtain dry coating weights of 5.5-6.0 grams/square meter. Prior to coating the aluminum, the bottoms of the cans were removed and the cans were then sliced to open them. The open can bodies were then passed through a metal roller multiple times to almost flatten them. The rolled aluminum can bodies were then taped to a flat aluminum panel prior to coating. The coated steel and aluminum panels were immediately fed into a one zone, gas fired, conveyor oven for 110 seconds. The coated steel panels were baked at 215°C and the coated aluminum panels were baked at 210°C. After cooling, the coated panels were cut into smaller pieces for testing, and there performance was compared to a commercial bisphenol A epoxy coating.

The coatings on steel panels were evaluated for the number of double rubs by hand it took to soften and break through the coating with a rag saturated with methyl ethyl ketone, and their flexibility was evaluated with a wedge bend test. For this test, coated steel panels were cut into 2 inch by 4.5 inch pieces, with the substrate grain running perpendicular to the long length of the cut panel. They were then bent over a ¼ inch metal dowel along the long length of the panel with the coated side facing out. The bent coupons were then placed onto a block of metal where a wedge was pre-cut out of it with a taper of 0 to ¼ inch along a 4.5 inch length. Once placed in the wedge, each bent coupon was struck with a block of metal which weighed 2.1 kilograms from a height of 11 inches to form a wedge where one end of the coated metal impinged upon itself and a ¼ inch space remained on the opposite end. The wedge bent panels were then placed into an aqueous solution of copper sulfate and hydrochloric acid for two minutes to purposely etch the aluminum panel in areas where the coatings failed and cracked. The etched wedge bent panels were then examined through a microscope at 1.0x power to determine how far from the impinged end along the bent radii did the coating crack. Flex results are reported as the percentage of non-cracked area versus total length of the wedge bent panel.

The coatings on aluminum panels were evaluated for their ability to adhere to the aluminum, to preserve their gloss, and to resist blushing and blistering after being immersed in three, acidic, aqueous solutions at 100°C for 30 minutes. 2 inch by 4 inch coated aluminum panels were placed into beakers that contained enough of the boiling test solutions to immerse half of the coated test panels. After being immersed for the prescribed time, the coated panels were rinsed with hot water, dried, and immediately evaluated for blistering, gloss, adhesion, and blush on a scale of 0 (best) through 5 (worse). To assess adhesion, a razor blade was used to scratch the coating eleven times, parallel and perpendicular at the interface where the coated panel was immersed. Scotch 610 tape was applied to the scribed area and quickly removed from the coating surface. The coating test results are shown in Table 2.

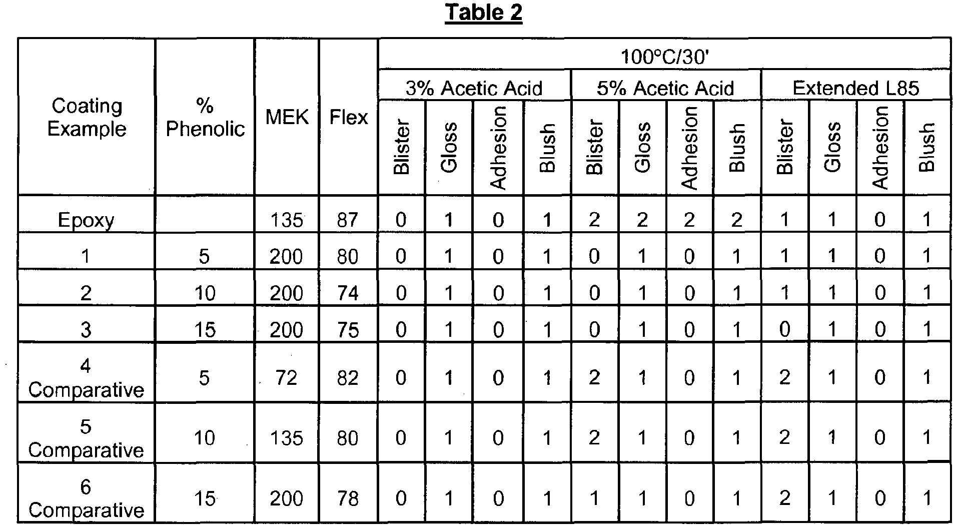

## Claims

1. An aqueous coating composition comprising:
(A) an aqueous polymer dispersion comprising a film-forming polymer in the form of dispersed polymer particles comprising a polymer phase P₁ and a different polymer phase P₂; the polymer dispersion obtained by free radical aqueous emulsion polymerization comprising the following steps:
(i) polymerizing in non-aqueous medium a first monomer charge M1 comprising a polymerizable ethylenically unsaturated monomer mixture comprising a carboxylic acid group-containing ethylenically unsaturated monomer and a phosphorus acid group-containing ethylenically unsaturated monomer to form the polymer phase P₁;
(ii) dispersing P₁ in aqueous medium and
(iii) polymerizing in the aqueous medium a second monomer charge M2 in the presence of P₁ comprising a polymerizable ethylenically unsaturated monomer mixture different from that of M1 and containing a 1,2-epoxy group-containing ethylenically unsaturated monomer to form the polymer phase P₂;
(B) a curing agent reactive with the film-forming polymer.

2. The aqueous coating composition of claim 1 in which M1 comprises an ethylenically unsaturated monomer selected from the group consisting of vinyl aromatic monomers and alkyl (meth)acrylates having 1 to 4 carbon atoms in the alkyl group.

3. The aqueous coating composition of claim 1 in which the phosphorus acid group-containing ethylenically unsaturated monomer has the following structure: 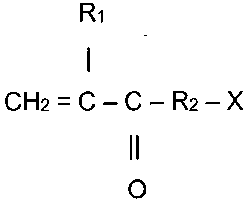 where R₁ represents hydrogen or methyl; R₂ represents a polyoxyalkylene group and X represents a phosphoric acid group.

4. The aqueous coating composition of claim 3
- in which R₂ has the following structure: 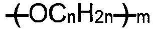 where n is an integer of 1 to 4 and m is from 2 to 40; or
- in which X has the following structure: 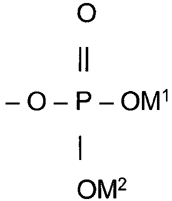 where M¹ and M² each independently represent hydrogen or a cation.

5. The aqueous coating composition of claim 1 in which the phosphorus acid group-containing ethylenically unsaturated monomer is present in amounts of 2 to 20 percent by weight based on total weight of the ethylenically unsaturated monomers in M1.

6. The aqueous coating composition of claim 1 in which the carboxylic acid group-containing ethylenically unsaturated monomer
- is acrylic acid; or
- is present in amounts of 15 to 60 percent by weight based on total weight of the ethylenically unsaturated monomers in M1.

7. The aqueous coating composition of claim 1 in which the 1,2-epoxy group-containing ethylenically unsaturated monomer
- is selected from the group consisting of glycidyl (meth)acrylate; or
- is present in amounts of 1 to 20 percent by weight based on total weight of the ethylenically unsaturated monomers in M2.

8. The aqueous coating composition of claim 1 in which M2 comprises an ethylenically unsaturated monomer selected from the group consisting of vinyl aromatic monomers and alkyl (meth)acrylates having 4 to 8 carbon atoms in the alkyl group.

9. The aqueous coating composition of claim 1 in which the weight ratio of P₁ to P₂ is from 1:2 to 1:5.

10. The aqueous coating composition of claim 1 in which the film-forming polymer has a weight average molecular weight of 10,000 to 100,000.

11. The aqueous coating composition of claim 1 in which the curing agent is selected from the group consisting of phenolplast and aminoplast.

12. The aqueous coating composition of claim 1 in which the film-forming polymer is present in amounts of 60 to 98 percent by weight, and the curing agent is present in amounts of 2 to 40 percent by weight based on total resin solids weight of the film-forming polymer and the curing agent.

13. A food can coated at least in part with a coating deposited from an aqueous coating composition according to any of claims 1-12.

14. The food can of claim 13 wherein the coated portion is the interior of the food can.

15. The food can of claim 13 wherein the coated portion comprises a can end.

## Patentansprüche

1. Wässrige Beschichtungszusammensetzung, enthaltend:
(A) eine wässrige Polymerdispersion, enthaltend ein filmbildendes Polymer in Form von dispergierten Polymerteilchen, die eine Polymerphase P₁ und eine davon unterschiedliche Polymerphase P₂ enthalten, wobei die Polymerdispersion durch radikalische Emulsionspolymerisation in wässriger Phase erhalten wird, die folgende Schritte aufweist:
(i) Polymerisieren in einem nicht wässrigen Medium einer ersten Monomercharge M1, enthaltend eine Mischung von polymerisierbaren ethylenisch ungesättigten Monomeren, die ein carbonsäuregruppenhaltiges ethylenisch ungesättigtes Monomer und ein phohphorsäuregruppenhaltiges ethylenisch ungesättigtes Monomer enthält, um die Polymerphase P₁ zu bilden,
(ii) Dispergieren von P₁ in einem wässrigen Medium und
(iii) Polymerisieren einer zweiten Monomercharge M2 in dem wässrigen Medium in Gegenwart von P₁, die eine Mischung von polymerisierbaren ethylenisch ungesättigten Monomeren enthält, die unterschiedlich ist zu der von M1 und ein 1,2-epoxygruppenhaltiges ethylenisch ungesättigtes Monomer enthält, um die Polymerphase P₂ zu bilden,
(B) ein Härtungsmittel, das mit dem filmbildenden Polymer reaktiv ist.

2. Wässrige Beschichtungszusammensetzung nach Anspruch 1, in der M1 ein ethylenisch ungesättigtes Monomer enthält, das ausgewählt ist aus der Gruppe bestehend aus aromatischen Vinylmonomeren und Alkyl(meth)acrylaten mit 1 bis 4 Kohlenstoffatomen in der Alkylgruppe.

3. Wässrige Beschichtungszusammensetzung nach Anspruch 1, in der das phosphorsäuregruppenhaltige ethylenisch ungesättigte Monomer die folgende Struktur aufweist: 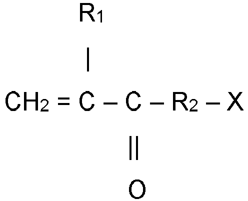 worin R₁ für Wasserstoff oder Methyl steht, R₂ für eine Polyoxyalkylengruppe steht und X für eine Phosphorsäurengruppe steht.

4. Wässrige Beschichtungszusammensetzung nach Anspruch 3,
- in der R₂ die folgende Struktur aufweist: 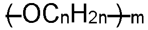 worin n eine ganze Zahl von 1 bis 4 ist und m gleich 2 bis 40 ist oder
- in der X die folgende Struktur aufweist: 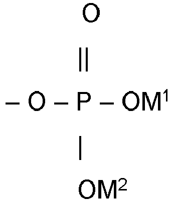 worin M¹ und M² jeweils unabhängig voneinander für Wasserstoff oder ein Kation stehen.

5. Wässrige Beschichtungszusammensetzung nach Anspruch 1, in der das phosphorsäuregruppenhaltige ethylenisch ungesättigte Monomer in Mengen von 2 bis 20 Gew.-%, bezogen auf das Gesamtgewicht der ethylenisch ungesättigten Monomere in M1, vorhanden ist.

6. Wässrige Beschichtungszusammensetzung nach Anspruch 1, in der das carbonsäuregruppenhaltige ethylenisch ungesättigte Monomer
- Acrylsäure ist oder
- in Mengen von 15 bis 60 Gew.-%, bezogen auf das Gesamtgewicht der ethylenisch ungesättigten Monomere in M1, vorhanden ist.

7. Wässrige Beschichtungszusammensetzung nach Anspruch 1, in der das 1, 2-epoxygruppenhaltige ethylenisch ungesättigte Monomer
- ausgewählt ist aus der Gruppe bestehend aus Glycidyl(meth)acrylat oder
- in Mengen von 1 bis 20 Gew.-%, bezogen auf das Gesamtgewicht der ethylenisch ungesättigten Monomere in M2, vorhanden ist.

8. Wässrige Beschichtungszusammensetzung nach Anspruch 1, in der M2 ein ethylenisch ungesättigtes Monomer enthält, das ausgewählt ist aus der Gruppe bestehend aus aromatischen Vinylmonomeren und Alkyl(meth)acrylaten mit 4 bis 8 Kohlenstoffatomen in der Alkylgruppe.

9. Wässrige Beschichtungszusammensetzung nach Anspruch 1, in der das Gewichtsverhältnis von P₁ zu P₂ von 1:2 bis 1:5 reicht.

10. Wässrige Beschichtungszusammensetzung nach Anspruch 1, in der das filmbildende Polymer ein gewichtsmittleres Molekulargewicht von 10.000 bis 100.000 aufweist.

11. Wässrige Beschichtungszusammensetzung nach Anspruch 1, in der das Härtungsmittel ausgewählt ist aus der Gruppe bestehend aus Phenolplast und Aminoplast.

12. Wässrige Beschichtungszusammensetzung nach Anspruch 1, in der das filmbildende Polymer in Mengen von 60 bis 98 Gew.-% und das Härtungsmittel in Mengen von 2 bis 40 Gew.-%, bezogen auf das Gesamtharzgewicht von filmbildendem Polymer und dem Härtungsmittel, vorhanden ist.

13. Konservendose, zumindest teilweise beschichtet mit einer Beschichtung, die aus einer wässrigen Beschichtungszusammensetzung gemäß einem der Ansprüche 1 bis 12 abgeschieden ist.

14. Konservendose nach Anspruch 13, wobei der beschichtete Anteil das Innere der Konservendose ist.

15. Konservendose nach Anspruch 13, wobei der beschichtete Anteil ein Dosenendstück umfasst.

## Revendications

1. Composition aqueuse de revêtement, comprenant :
A) une dispersion aqueuse de polymères, comprenant un polymère filmogène à l'état de particules de polymère dispersées comprenant une phase de polymère P₁ et une phase de polymère différent P₂, laquelle dispersion de polymères est obtenue par polymérisation par voie radicalaire en émulsion aqueuse, comportant les étapes suivantes :
i) faire polymériser en milieu non-aqueux une première charge de monomères M1, comprenant un mélange de monomères polymérisables à insaturation éthylénique, comportant un monomère à insaturation éthylénique et à groupe acide carboxylique et un monomère à insaturation éthylénique et à groupe acide phosphoré, pour que se forme la phase de polymère P₁,
ii) disperser ce polymère P₁ dans un milieu aqueux,
iii) et faire polymériser en milieu aqueux, en présence du polymère P₁, une deuxième charge de monomères M2, comprenant un mélange de monomères polymérisables à insaturation éthylénique différent de celui de la charge M1 et comportant un monomère à insaturation éthylénique et à groupe 1,2-époxy, pour que se forme la phase de polymère P₂ ;
B) et un agent durcisseur réactif vis-à-vis du polymère filmogène.

2. Composition aqueuse de revêtement, conforme à la revendication 1, dans laquelle la charge M1 comprend un monomère à insaturation éthylénique choisi dans l'ensemble constitué par les monomères vinyl-aromatiques et les acrylates et méthacrylates d'alkyle dont le groupe alkyle comporte de 1 à 4 atomes de carbone.

3. Composition aqueuse de revêtement, conforme à la revendication 1, dans laquelle le monomère à insaturation éthylénique et à groupe acide phosphoré présente la structure suivante : 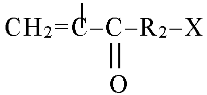 dans laquelle R₁ représente un atome d'hydrogène ou un groupe méthyle, R₂ représente un groupe poly(oxy-alcanediyle) et X représente un groupe acide phosphorique.

4. Composition aqueuse de revêtement, conforme à la revendication 3, dans laquelle
- le groupe R₂ présente la structure suivante : 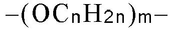 où l'indice n est un nombre entier valant de 1 à 4 et l'indice m vaut de 2 à 40,
- ou le groupe X présente la structure suivante : 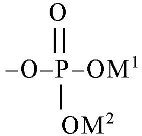 où M¹ et M² représentent chacun, indépendamment, un atome d'hydrogène ou un cation.

5. Composition aqueuse de revêtement, conforme à la revendication 1, dans laquelle le monomère à insaturation éthylénique et à groupe acide phosphoré se trouve présent en une proportion de 2 à 20 %, en poids rapporté au poids total des monomères à insaturation éthylénique dans la charge M1.

6. Composition aqueuse de revêtement, conforme à la revendication 1, dans laquelle le monomère à insaturation éthylénique et à groupe acide carboxylique
- est de l'acide acrylique,
- ou se trouve présent en une proportion de 15 à 60 %, en poids rapporté au poids total des monomères à insaturation éthylénique dans la charge M1.

7. Composition aqueuse de revêtement, conforme à la revendication 1, dans laquelle le monomère à insaturation éthylénique et à groupe 1,2-époxy
- est choisi dans l'ensemble constitué par l'acrylate de glycidyle et le méthacrylate de glycidyle,
- ou se trouve présent en une proportion de 1 à 20 %, en poids rapporté au poids total des monomères à insaturation éthylénique dans la charge M2.

8. Composition aqueuse de revêtement, conforme à la revendication 1, dans laquelle la charge M2 comprend un monomère à insaturation éthylénique choisi dans l'ensemble constitué par les monomères vinyl-aromatiques et les acrylates et méthacrylates d'alkyle dont le groupe alkyle comporte de 4 à 8 atomes de carbone.

9. Composition aqueuse de revêtement, conforme à la revendication 1, dans laquelle le rapport en poids des polymères, de P₁ à P₂, vaut de 1/2 à 1/5.

10. Composition aqueuse de revêtement, conforme à la revendication 1, dans laquelle le polymère filmogène présente une masse molaire moyenne en poids de 10 000 à 100 000.

11. Composition aqueuse de revêtement, conforme à la revendication 1, pour laquelle l'agent durcisseur est choisi dans l'ensemble formé par les phénoplastes et les aminoplastes.

12. Composition aqueuse de revêtement, conforme à la revendication 1, dans laquelle le polymère filmogène se trouve présent en une proportion de 60 à 98 % en poids, et l'agent durcisseur se trouve présent en une proportion de 2 à 40 % en poids, par rapport au poids total des matières solides de résine que sont le polymère filmogène et l'agent durcisseur.

13. Boîte de conserve alimentaire revêtue, au moins en partie, d'un revêtement formé par dépôt à partir d'une composition aqueuse de revêtement conforme à l'une des revendications 1 à 12.

14. Boîte de conserve alimentaire, conforme à la revendication 13, dans laquelle la partie revêtue est l'intérieur de la boîte de conserve alimentaire.

15. Boîte de conserve alimentaire, conforme à la revendication 13, dans laquelle la partie revêtue comprend une extrémité de la boîte de conserve.
